# EUROPEAN PATENT SPECIFICATION

(11) **EP 1 387 583 B1**
(45) Date of publication and mention of the grant of the patent: **02.11.2005**
(21) Application number: 03025066.6
(22) Date of filing: 23.12.1999
(51) Int. Cl.: H04N 7/173, H04N 5/445

(54) **Automatic electronic programme scheduling system**
Automatisches-Elektronisches-Programmablauf-System
Système de planification automatique éléctronique de programmes

(30) Priority: 23.12.1998 GB 9828589
(43) Date of publication of application: 04.02.2004
(62) Divisional of application: 99962444.8
(73) Proprietor: NTL Group Limited, Hook, Hampshire RG27 9XA (GB)
(72) Inventor: Lang, Jack Arnold NTL House, Hook RG27 9UP Hampshire (GB); Strick, Michael NTL House, Hook RG27 9UP Hampshire (GB)
(74) Representative: Martin, Philip John

(56) References cited:
- WO-A-97/49242
- US-A- 5 576 755
- US-A- 5 758 259
- US-A- 5 844 620
- PATENT ABSTRACTS OF JAPAN vol. 1997, no. 11, 28 November 1997 (1997-11-28) & JP 9 180292 A (SONY CORP), 11 July 1997 (1997-07-11)

## Description

The present invention relates to methods and software for building a personal channel schedule.

Until recently conventional televisions have been able to receive only a relatively limited number of channels of programmes. Typically terrestrial television broadcasting has provided 4 or 5 channels, satellite broadcasting of the order of a dozen channels and cable television broadcasting a few tens of channels. With the advent of new forms of programme delivery such as digital terrestrial television (DTT), digital satellite television, web casting - delivery of programmes over the Internet - video-on-demand (VOD) and near video-on-demand (NVOD) the number of available television channels is predicted to grow dramatically. Consumers will be able to choose from many thousands of programmes or programme clips, which could include daily video magazines, regularly updated news from hundreds of sources around the globe, music tracks and videos, games and films. Newer PC-TVs and set-top-boxes (STBs) have the ability to store programmes on an internal hard disk for viewing later and to access webcast video over the Internet, as well as having the capability to receive many hundreds of channels of broadcast material and NVOD movies. Thus consumers will be faced with an overwhelming choice of viewing.

Television viewers exhibit both "push" and "pull" behaviour. In push behaviour a passive viewer selects a channel, typically by editorial style much as one might choose a newspaper, and is essentially passive thereafter. Pull behaviour is where a viewer deliberately chooses or "pulls" a desired programme, for example a video, soap, sporting fixture or well-advertised/trailed programme. Viewers may even pay for such material. However, in both cases the viewer is making a choice from a small number of alternatives. When the choice becomes too great the viewer easily becomes confused and will typically ignore much of the material on offer by restricting viewing to a few familiar channels.

An electronic programme guide (EPG) is, generally speaking, an application resident on a set top box designed to aid the viewer in the navigation of and selection from broadcast material available in a digital TV environment. Conventional electronic programme guides (EPGs) are of little assistance when the number of channels or viewable entries becomes large. The choices available to a viewer become too many to fit on a single page or on few enough screens to be understandable. Channel surfing is also difficult because of the difficulty in remembering what is being broadcast on the sampled channels. With 500 channels, it would take 83 minutes to glance at each channel, allowing 10 seconds per channel.

EP-A-0 774 866 describes apparatus for searching for specific television programmes which satisfy certain criteria concerning the user's viewing preferences and for generating a list of such programmes in order to predict for the viewer certain programmes which may be of interest; it does not, however, generate a single, time-based schedule of suggested programmes. US 5,867,205 describes a method and apparatus for controlling video/audio and channel selection for a communication signal based on textual information indicative of channel contents of a signal. A signal processing unit determines whether channel contents are amongst contents defined by section data but no personal channel schedule is generated. WO 96/17467 describes a system and method for scheduling broadcast of and access to video programmes and other data using customer profiles. An agreement matrix enables the system to present to the customer a subset of the programmes available at a particular point in time. The "virtual channels" of '467 are generated either at a video head-end or in a set top multi media terminal. There is no means to download a "virtual channel" schedule from the head end to the customer's set top terminal and the system further requires the use of an expert panel to classify programmes and source channels. US 5,534,911 describes a television system in which, when a customer selects a virtual channel, a computer switches a video receiver to a physical channel on which a programme of having the best evaluation is transmitted. However, there is no attempt to create a personal channel schedule. WO 97/49242 describes a system for automatically customising a television schedule guide to an individual viewer or group of viewers. A computer automatically searches a database of television programmes for programmes having the same criteria as the viewer's favourite programmes and automatically places the programmes that include the criteria into the program guide. It does not, however, generate a personal channel schedule. US 5,576,755 describes a system and method for automated checking of programme listings data in a database of television programme schedule listings used in an EPG. The database is checked to determine if, for any designated station, there are any gaps between the end time of a programme and the start time of the next programme. It does not, however, generate a personal channel schedule.

The various aspects of the present invention are aimed at alleviating these problems by providing a more intelligent "electronic programme guide" which incorporates a concept of a personal channel, with automatic programme scheduling to assist in choosing between sources of programming. A personal channel is essentially a series of programmes from diverse sources intended to be shown in succession, selected according to the viewer's preferences. More particularly, in one embodiment a virtual channel comprises a seamless schedule of material from any available broadcast channels, automatically selected for maximum relevance to a set of parameters defined by the viewer. The set top box automatically re-tunes to each broadcast channel as required, providing the effect of a single channel.

The virtual channel allows a user to generate a "personal" channel or channels comprising a sequence of programmes from multiple programme sources, chosen according to the user's taste or specifications. This helps to simplify the user's choices by changing emphasis from a broadcast model to a "personal channel model". It thus allows the user to choose between a small number of more attractive options.

The system may be configured to schedule a plurality of personal channels for the user. Thus a user could set up channels such as "My sport's channel", "My movie channel", "My gardening channel" and "My news channel", and "surf' between them as if they were broadcast channels. The system is preferably controllable to restrict selectable personal channels to those associated with a particular current user. As the user is identified, channel choice can also be restricted by parental or other control, for example to screen out programmes with violent or adult content. Preferably a portion of personal channel schedule is definable for replacement by a schedule of a broadcast television channel. This allows the personal channels to map to and include broadcast channels, by the use of suitable criteria, for example, "Programmes from BBC1".

The invention provides a method of building a personal channel schedule comprising
i) receiving user preference information characterising a user's preferred programmes;
ii) receiving programme descriptor information for broadcast programmes;
iii) scoring the broadcast programmes based on the user preference information using the programme descriptor information;
iv) selecting a first programme using the results of the scoring and adding this to a personal channel schedule;
v) identifying either later adjoining programmes which start after the end of the last programme in the schedule or earlier adjoining programmes which finish before the start of the first programme in the schedule;
vi) scoring the adjoining programmes based on the user preference information;
vii) selecting a second programme from the adjoining programmes using the results of scoring the adjoining programmes
viii) adding the second programme to the schedule; and
ix) repeating steps (v)-(viii) to build up the personal channel schedule.

Preferably a plurality of schedules is generated, preferably using different first programmes, and each scored to determine the best match to the user's preferences. This helps avoid local minima in the search space caused by restricting to a particular first selected programme.

These and other aspects of the invention will now be described, by way of example only, with reference to the accompanying drawings in which:
Figure 1 shows a block diagram of an example of a system for providing a personal channel;
Figure 2 conceptually illustrates the concept of a personal channel;
Figure 3 shows a simple example of an on-screen electronic programme guide for a virtual channel;
Figure 4 shows a relational database for storing programme data;
Figure 5 shows a simple example of a user interface for searching the database of Figure 4;
Figure 6 shows a block diagram of software modules for an electronic programme scheduling system;
Figure 7 shows, schematically, parts of a user interface.
Figure 8 shows a flowchart illustrating a method for providing a personal channel;
Figure 9 shows an algorithm for constructing a personal channel based on a user's preferences;
Figure 10 shows a multi-channel EPG view screen;
Figure 11 shows a channel preferences screen;
Figure 12 shows a user profile screen; and
Figure 13 shows a summary of the relationship between files of EPG system.

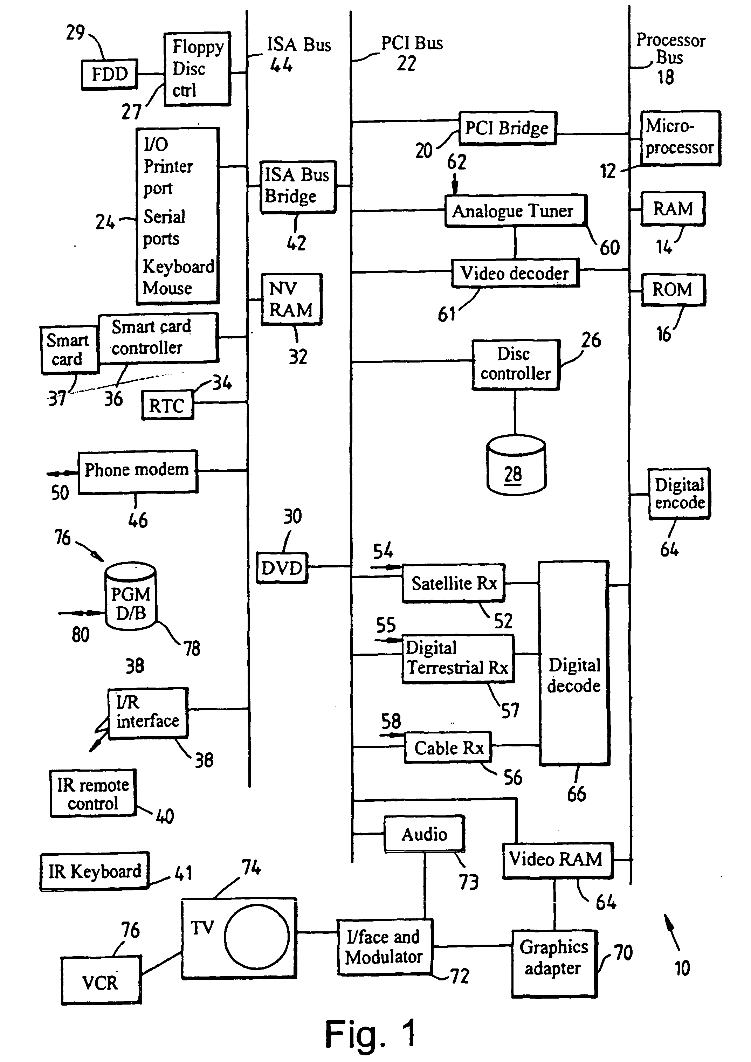

Figure 1 shows one example of a system which is suitable for providing a home entertainment device, such as a television, with a personal channel. Logically the system is located between a programme source such as a terrestrial television programme transmitter and a television receiver; physically it may be incorporated within a television set. In outline the system is based upon hardware corresponding to a conventional personal computer system with the addition of components for television programme reception and processing and modifications to enable the computer to be embedded in a conventional set top box (STB) with infrared remote control. Much of the functionality is provided by firmware stored in read only memory (ROM), although the program could be stored on hard disk, where the STB is so equipped, and executed from random access memory (RAM). The configuration of the computer system can be varied to suit the level of desired functionality. The illustrated system is suitable for a processor which performs multimedia operations (such as a Pentium with MMX) but a simpler microcontroller could be used and the basic functionality required of the system could even be provided by dedicated hardware. The skilled person will recognise that many variations to the illustrative hardware can be made according to cost, component availability, system functionality and other considerations. Although the system will be described as providing programmes to a television, it is suitable for use with any home entertainment device such as a VCR or DVD recorder and, in general, any programme receiving device.

In Figure 1 the set top box is generally illustrated at 10 and comprises a microprocessor 12 coupled to random access memory (RAM) 14, ROM 16 and peripheral component interconnect (PCI) bridge 20 by processor bus 18. ROM 16 holds system BIOS (Basic Input Output System) and operating software, the BIOS interfacing between the operating software and the STB hardware. If desired, the BIOS ROM can instead be coupled to the processor via the low speed ISA bus 44. PCI bus 22 is driven by PCI bridge 20 and is suitable for high speed data transfer although it is slower than processor bus 18. Optionally, hard/floppy disk controller 26 and disk drive 28, and digital versatile disk (DVD) drive and controller 30 are coupled to the processor via the PCI bus 22. To the ISA bus is attached non-volatile RAM 32 for storing, for example, user input information; real time clock 34; smart card interface 36 for smartcard 37 and infrared control link device 38. Commands are issued to the set top box by the user using a hand held infrared remote control unit 40 or infrared keyboard 41 which communicates with control link device 38.

Industry standard architecture (ISA) bus 44 is coupled to PCI bus 22 by ISA bus bridge 42. The system is preferably provided with means to receive television programmes from a variety of sources such as broadcast programmes from satellite, cable and conventional terrestrial transmitters, video or near-video-on-demand (both referred to as NVOD) sources, and Web cast programmes from Intemet-based sources. However, a simplified system may lack such receiving means and may instead control the television to display a desired programme, for example by transmitting infrared commands to the transmitter as though it were the television's remote control device; in this case IR module 38 may also be an IR transceiver.

In Figure 1, conventional tuner 60 has input 62 coupled to a terrestrial television aerial to receive terrestrially broadcast programmes; cable television receiver 56 has input 58 coupled to a cable TV network; satellite receiver 52 has input 54 coupled to a satellite receiving dish; and digital terrestrial receiver 57 has input 55 from a suitable terrestrial aerial. Telephony modem 46, which may be a cable modem, or an International Subscriber Digital Network (ISDN) or an asymmetric digital subscriber line (ADSL) modem (or any suitable digital subscriber line device) is coupled to telephone line 50 to receive VOD/NVOD programmes. Digital programme receiving devices have their digital information stream output coupled to decode unit 66 (audio paths are not shown in Figure 1), which is also coupled to ISA bus 44 or PCI bus 22.

Television programmes may have associated data streams and the programme receiving means are therefore preferably provided with means to receive data and/or to extract data from received video signals which can, for example, be included in the vertical blanking interval (VBI) of a television signal. Since the ADSL connection provides a data channel, this can also be used for data communications. Such connections allow the system to handle data casting and to extract programme data such as broadcast channel identification information, time and date information and subtitles.

The apparatus is preferably configured to view programme video information and simultaneously browse the Web and carry out Web related activities, for example downloading software or information.

An audio and motion video compression module 64 is also coupled to bus 18 and may also be implemented in software. Data may be input to this to allow broadcast programmes to be recorded locally and made available for later viewing. The video data is compressed according to a standard format such as MPEG, Real Media or H323 and then stored as a compressed file on disk. Module 66 also includes corresponding decoding means to decompress the compressed video and audio. Optionally, the video compression and decompression can be performed by processor 12. The system is preferably operable to concurrently store a received programme and to play a stored programme by, for example, interleaving write and read-erase access cycles to the storage module's disk drive.

A video output carrying programme information, is coupled to the television via graphics adapter/video signal combiner 70 and modulator 72. If the television has a direct video input, modulator 72 may be omitted and the television 74 may be connected directly to video output via a SVGA socket, a SCART socket, S-Video socket, RCA phono plugs or other well known interfaces. Video RAM 70 is connected to the processor bus 18 and allows the system to generate graphics and combine them with the digital signal from video decode 66, for example using overlay or picture-in-picture modes, and can also output a video signal without any additional graphics. The system is configured to directly overlay text and/or graphics onto programme video and to achieve a similar result by overlaying a sparse Web page. This information can, for example, be used to provide further information about the programme or channel currently being viewed, for example information on "What's on next".

The system also includes an event detector module implemented in software to detect events in a programme video stream such as programme breaks within and/or between programmes. Such breaks or interruptions can be caused by commercial advertising or the interruption of other programmes for example news programmes. For example, in the U.K. a pair of vertical bars appears in the top right hand coRNer of the picture frame as a video switching mark shortly before a commercial break and the event detector is configurable to provide the video decode responsive to programme break detection. For digital transmissions, appropriate digital descriptor information is used to detect programme change.

Events can be determined by absolute and/or relative times, for example "at 10 p.m." or "five seconds after the start of the BMW advert (Registered Trade Mark)". Events, and the systems response to them, can be defined by extensions to HTML information associated with the relevant programmes. For example, in accordance with the recommendations of the Advanced Television Enhancement Forum (ATVEF) recommendations on proposed HTML extensions. The events and responses can also be transmitted in-band, for example in the VBI as a subtitle (the US EIA 746 standard) or in a digital video stream as a subtitle or as a separate event object in the data carousel, or even can be separately input via some other online connection.

The system is preferably equipped with bi-directional communications, so that information can be both received from and transmitted to remote apparatus. Thus cable receiving means 56, phone modem 46 are preferably all operable to transmit data as well as to receive programme and data information. Thus conventional Web-browser software in firmware may be employed to allow a user to interact with Web pages via the Internet, for example using IR remote control 40 to select hypertext links on Web pages displayed to the user by graphics adapter 70. Programme descriptor information can be displayed with selectable/clickable extensions and, more generally, Web-based electronic programme guide (EPG) information can be displayed. Although the operating system software has been described as being stored in ROM, it may be stored in non-volatile memory such as FLASH memory (EEPROM) whereby the system can be updated by downloading new software over one or other of the communication links, either when it becomes available or when a user pays to upgrade the system.

Also shown in Figure 1 is a database 76 remote from the set top box and comprising database storage means 78 and bi-directional communications link 80 for communication with the set top box (STB). Although shown remote from the apparatus, the programme database may be incorporated within the apparatus either in memory or on the local hard disk and generated from broadcast programme information. The database is provided with a software interface based on a standard protocol such as ODBC (Open Database Connectivity), for connection to other elements of the system. Again, although the database is illustratively shown as a unitary structure it could also comprise information held in a large number of disparate sources, for example electronic programme guides at various different Web page URL's. A further alternative is that the database is held remotely, as illustrated, with a copy of the database held locally in the set top box, for example, on disk or in the NVRAM and periodically updated by file transfer, for example, by telephone dial-up on demand or at a fixed time daily or by data insertion in the broadcast signal, for example overnight in in-band data such as VBI inserted data for analogue TV or as part of the data carousel for digital TV. Communication with the database can be by any conventional means, for example by phone modem 46 and/or a copy or partial copy of the database can be downloaded to the STB using the satellite 52, digital 57 and/or cable 56 receiver(s). The information held in the programme database is described in more detail below.

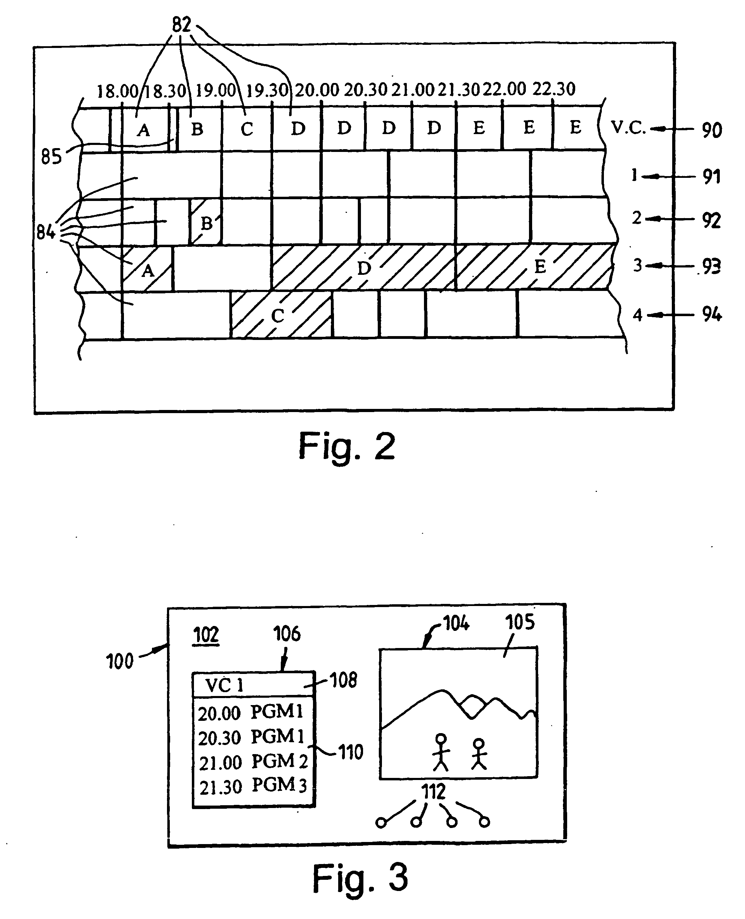

A personal channel is a schedule of programmes which have been selected from programmes available from real channels or other programme sources (for example, Webcast programmes). The schedule is made up by selecting programmes from a variety of channels for showing in, preferably, defined time slots in the personal channel. The concept of a personal channel is illustrated diagrammatically in Figure 2. Figure 2 shows a personal channel schedule 90 and schedules for four real channels, 91, 92, 93 and 94. The real "channels" may include cable, satellite, terrestrial and Web-cast television channels and NVOD programmes.

Illustratively the personal channel 90 has a template structure with notional divisions at half hour intervals defining half hour time slots 82 for programme scheduling. Time slots of other lengths can also be defined and, more generally, a flexible structure can be adopted in which the time slots are of varying length, preferably with start and end times corresponding to start and end times of programmes on a real channel(s).

The real channels have programmes 84 of variable start time and duration scheduled as shown. In the illustrated example, the personal channel schedule comprises five programmes, A, B, C, E and E during the interval 18:00 hours to 22:30 hours. Programme A is scheduled to occupy the slot from 18:00 hours 18:30 hours on the personal channel; it is available on real channel 93 during the same interval and therefore a system for providing the virtual channel must select programme information from channel 93 for output during this time period.

The second time slot in the personal channel begins at 18:30 hours and programme B, available on channel 92, is schedule for this time slot. Programme B ends at 19:00 hours, which corresponds with the end of the time slot on the personal channel, but it starts after 18:30 hours, leaving a gap 85 in the personal channel schedule. This gap may be filled either by programme material from channel 93 following programme A or by programme material from channel 92 preceding programme B, or by a supplementary programme material. Such supplementary material may comprise advertising from a standard source, material from a source defined by the personal channel schedule information, or material from a source automatically chosen by the system according to available information (such as information describing the programmes in the personal channel schedule or information describing or characterising a system user or user preferences). It may include material previously recorded on a local storage device. Since, by definition, VOD programmes are effectively available on-demand, gaps and overlaps in the personal channel schedule can be adjusted by adjusting the start time of VOD programmes in the schedule.

Programme C from channel 94 is scheduled for the third illustrated half-hour time slot on the personal channel, and programme D from channel 93 is scheduled for the following four time slots. It can be seen that programmes C and D overlap and, in the illustrated example, programme D has taken priority over programme C in the personal channel schedule. Programme overlaps can be handled either by manually choosing which programme takes priority, or by pre-programmed rules. For example, the earlier or the later programme may always take precedence or rules can depend upon programme related information such as programme genre which allows rules such as "movies take priority over news" to be defined. In a preferred embodiment the system has a basic set of in-built rules which can be modified by the user.

As described above, when the set top box includes means to receive more than one programme at once and when it includes motion video storage means, overlapping programmes such as C and D may be scheduled at different times or to run consecutively. For example, programme C could be scheduled for both slots between 19:00 hours and 20:00 hours then, whilst, from 19:30 onwards C is being provided to the television, the initial half hour of D is recorded, and then after 20:00 hours the initial part of D is output to the television whilst the later part of D is concurrently recorded. This concurrent playback and recording is continued to move the end of programme D and the start of programme E to approximately 22:00 hours. The system is operable in a similar way to prevent a personal channel schedule being disrupted by a programme which is broadcast at a later time (or an earlier time) than that at which it is initially described as being available. The actual broadcast time of a programme can be determined by video stream events and/or from data downloaded by the system and by concurrent recording and playback the whole schedule can be shifted back in time until a suitable gap or lower priority programme is encountered.

If desired, more than one consecutive programme from a real channel can be scheduled on the personal channel, and in this case it is convenient to provide means whereby a user can map a portion of personal channel 90 to a corresponding portion of a real channel. It is preferably also possible to fully map the personal channel to a real channel so that, for example, personal channel 90 may be defined as identical to real channel 93.

Although the scheduled entities have been referred to as programmes (audio, video or multimedia), other similar entities such as computer games, computer based learning activities and interactive telecommunication events may also be scheduled.

The information defining a personal channel schedule comprises, at its most basic, an ordered list of programme entities. Associated with each entity is information specifying a real channel or other programme source, including other personal channels, from which the channel entity is available. Preferably the personal channel schedule information comprises, for each scheduled programme, information identifying the start time of the programme as well as information identifying a real channel on which the programme is available at that start time. Programme duration information may also be included. In the case of NVOD programmes the "real channel" information comprises NVOD programme source information.

The operating software in the ROM 16 of the set top box uses information defining the personal channel schedule to control the set box top to provide the set scheduled programmes to output 74 to the television at the correct times. At a programme start time processor 12 selects the appropriate programme input means and real channel and logically couples the video stream to output 67 or the video switch and thence to the output 74 of the set top box. The video output is provided to the television so that the output video stream can be selected in the same way that other real channels on television are selected. In one embodiment the modulator 72 provides a UHF radio frequency output to the television and when the television is tuned to this frequency the programmes scheduled on the personal channel are provided so that to a user the personal channel is selectable so that it appears to another real channel.

Figure 3 shows a simple exemplary screen display 100 presented to the television user when the virtual channel is selected. The display comprises a background region 102, which may be plain or which may include logos and/or advertising material, and a picture-in-picture region 104 in which a currently selected video stream 105 is displayed. A programme information region 106 is provided with a header bar 108 identifying the currently selected virtual channel and a programme guide region 110 displaying a list of programmes and times. Predefined or soft menu buttons 112 are also provided for control of, *inter alia*, scheduling and electronic programme guide functions.

Screen display 100 may be downloaded as a Web page or may comprise locally generated graphics or may be a combination of these; if display 100 is a Web page, screen regions such as menu buttons 112 may include hypertext links to other Web pages. In a preferred embodiment, selecting region 108, for example by clicking on the region with a pointer, displays a list of channels including real and virtual channels; selecting region 110 changes the display of programme information, displaying programmes at other times and/or further information on a selected programme; and selecting region 105 expands the video to fill the screen.

The system includes input means to receive information, as described above, defining the personal channel schedule. In a simple system, the input means comprises a communications device such as phone modem 46 or cable receiver 56 together with a software driver operating together to allow a schedule to be downloaded from a remote location such as a critic's choice Web page thus a user could, for example, download a newspaper's recommended choice of viewing for the evening. Smart card interface module 36 can similarly be used to load personal channel schedules from a user's or a published Smart card (i.e. a card incorporating a silicon chip data storage module).

The operating software includes software to allow a user to define a personal channel schedule. For this mode of operation the system includes an interface means (hardware and/or software) to communicate with the programme database, as outlined above. To allow user scheduling of programmes the database must include programme time and channel information needed to construct the personal channel schedule as well as information identifying the programmes to be scheduled, for example programme titles.

The database may be held locally or remotely from the apparatus, for example at a regional head-end delivery point. In cable systems with a permanent connection normal remote access protocols can be used to download the data via some out-of-band data path, for example using a cable modem. Alternatively, both a local and a remote database can be used, with the local database as a mirror of the remote master database.

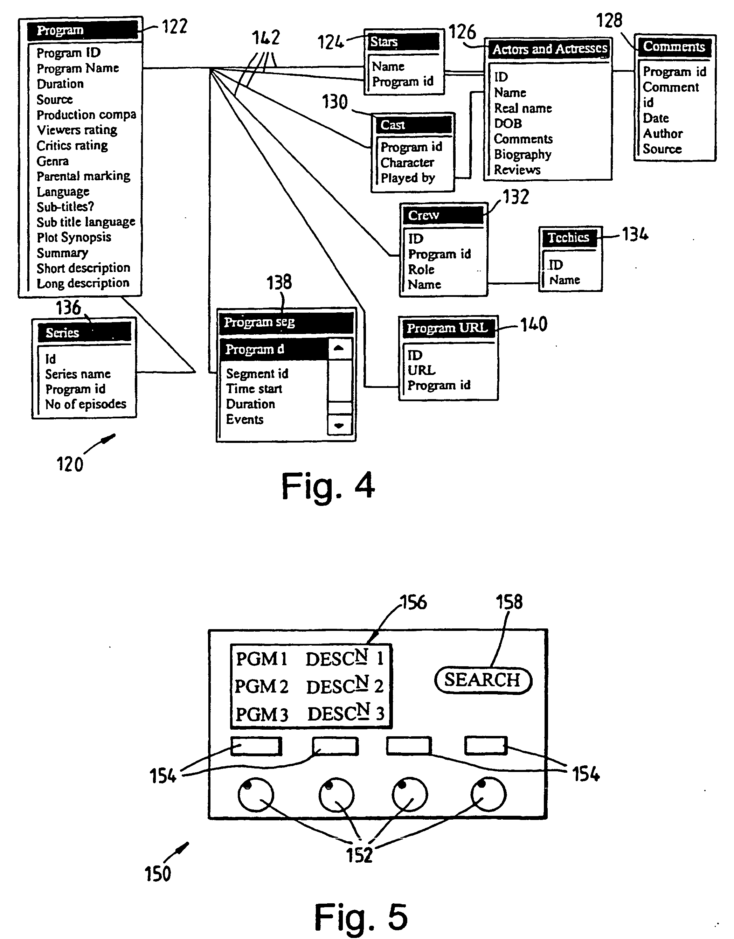

To allow the user to make an informed choice of programmes for scheduling the database preferably also comprises programme descriptor information characterising the content of the programmes in the database so that the user can search the database for programmes of a desired type or having specific features. Figure 4 shows an example schema 120 for a relational programme database. Associated with each programme in a "programme" table 122 are programme I.D., programme name, duration, source, production company, viewer's rating, critic's rating, genre, parental marking (age suitability/certification; violence or bad language; religion; nudity) language, indication of the presence of sub-titles, sub-title language, plot synopsis, summary, short description, long description, and other fields such as producer and director can also be included. Other illustrative linked tables include "stars" 124, "actors and actresses" 126, "comments" 128, "cast" 130, "crew" 132, "techies 134", "series 136", "programme segment" 138, "programme, and URLs" 140 (identifying, for example, an NVOD programme source). The links 142 between the tables in the relational database indicate which tables share data.

The data can be manually entered into the database or derived from a standard electronic programme guide feed or retrieved from broadcasters' or other Web pages using Web-spider search techniques or can be derived from a combination of these sources. If a Web-spider search engine is used, it is desirable that the EPG data to be collected by the Web-spider is published in a standard format so that the information corresponding to the various fields in the database can easily be located.

In an example systeme the Web-spider (which is essentially a software module) begins at a starting Web page, which may be predefined or manually entered. This page is searched for programme information for the database and for hypertext links to other Web pages, preferably using key words to identify the potentially most useful links. The search engine then either follows a single link to a new Web page where again electronic programme guide data and further hypertext links are gathered, or the software creates two or more separate tasks to follow a plurality of hypertext links simultaneously. In this way EPG data is gathered as the search engine works its way through a tree of hypertext links. When a dead end is reached the search engine works back up the tree until an unused link is found.

Although a notional tree of links is constructed, in reality there is no tree-like hierarchy amongst the Web pages searched and, theoretically, such a strategy allows virtually the entire Web to be searched. If desired, searching can be made more efficient by including a list of URLs or links to pages where it is known that EPG data is located, or to pages which are known to include links to useful EPG pages, and the search engine can be configured to search these first or to search to a limited depth from these predefined pages. Again, the predefined pages can, for example, be manually entered or downloaded from a manually updated source.

An example of the system includes a user interface for definition of a personal channel scheduled by the user and/or for tailoring or alteration of a predefined or downloaded virtual channel schedule. Figure 5 shows a simple screen display 150 for such a user interface, which allows the user to search the programme database according to user defined criteria and to display programmes matching the criteria, either for immediate showing, or for recording for later viewing, or for scheduling on a personal channel. User interface 150 for capturing the users input and displaying the results, can be a Web-browser extended for TV use, for example in accordance with the recommendations of the Advanced Television Enhancement Forum (ATVEF).

In the example, knobs 152 are used to dial up criteria which appear in display windows 154. Thus a first window may be used to select a genre such as a movie, the second window an associated theme such as "western", a third window, "stars" and a fourth window "John Wayne". A more advanced user interface can also include means to enter key words for word, name, subject, and /or title word searches to allow user for example, to make a request such as "I want to watch gardening programme about heritage tomatoes".

Example search criteria include programme name, star, genre (i.e. programme type such as movie, documentary, news bulletin), theme (e.g. western, comedy, gardening), key words and description, critic's/viewers' ratings, source or broadcast channel (e.g. BBC1), parental guidelines (e.g. "No nudity", or "before 9 p.m."), language.

The system operating software searches the database using standard database query techniques according to the user defined criteria. After the criteria has been dialled-up or entered, a list of programmes and related information (title, time, duration, description etc) appears in window 156 and button 158 can be used for additional searching/programme display. The user may then tailor or alter their personal channel schedule.

The system can also include means to identify a current user of the set top box. In one embodiment this is provided by a login screen where a user name and password must be entered before other elements of the operating system can be accessed. Since the system is aware of the user's identity, the viewing and/or scheduling of programmes can be restricted in accordance with the current user. For example, channel descriptor bar 108 in Figure 3 can be selectable to list channels available to a current user. In an alternative embodiment, only one or a few users need enter a password and all the non-password protected users are subject to viewing/scheduling restrictions. This arrangement allows parental control guidelines to be set by a nominated user, such as the account holder, or other users of the set top box

Parental control may include or exclude programmes with markings that indicate certain categories, such as nudity, violence, religion, bad language, gambling, alcohol or substance abuse, and all set time constraints, for example, "before 9 p.m.", or "not more than one hour per day or five hours per week". This is achieved by storing data linking a user identity (either a specific named user or a class such as "non-password user") with programme channel and/or descriptor information. If a number of personal channels are shared between a number of users, separate user defined sets of personal channels may also be specified.

The system may also include input means to receive other user information, in addition to user identity information; this may be stored locally or remotely. In particular, the system is capable of receiving preference information characterising a user's preferred programmes. This can be based on information directly entered by a user or on information characterising the user's history of usage of the system, for example, generalisations using AI (Artificial Intelligence) techniques, based upon locally stored viewing statistics. User entered preference information may describe explicit user preferences (for example, "I like westerns") or may be based upon more general information characterising the user, such as their socio-economic class. Preference information can also be derived from "voting", in which the user specifies programmes which have been enjoyed and/or disliked.

The operating software may utilise the preference information to automatically generate a personal channel schedule. In one example the user defines a template of variable length slots - for example, a documentary, then a news bulletin, then a movie - with a set of criteria for each slot and any additional constraints - for example news must be at 10 p.m., English language only. For each slot a set of candidate entries is found from the database, and scored, for example using Bayesian combination according to additional criteria and user weightings (for example critics or viewers' ratings) according to its fit to the slot and/or how long ago the same programme was selected. The optimum or top scoring candidate is then chosen for that slot. The Bayesian combination used is the sum of (the rating x the importance of that rating).

Preferences can be adjusted by the user given a positive or negative score for a programme, and as a result adjusting the importance of the selection criteria pro-rata. Additional absolute criteria such as parental controls, can then be applied. A virtual channel can also be constructed by adjusting one or more built-in general profiles chosen according to the required mood - for example, Saturday night viewing, daytime viewing, young person's viewing. A personal channel can be defined by a set of user weightings and selection criteria rather than by an explicit list of programmes and times. In this case a virtual channel can be mapped to a broadcast channel by giving an infinitely high weight to "programme source" term in the set of criteria.

The system software preferably allows a user the option of making a personal channel schedule available for transmission to a remote destination. This allows targeted marketing by a service provider and the exchange of personal channel schedules, either explicitly defined or as preference data sets, to be exchanged between users in different locations, for example between friends and neighbours. Preferably schedule information can be downloaded to a Smart card which the user can then carry around, for example to allow the viewing of preferred personal channels on a hotel television. The Smart card need only carry the user's identity if the user's information is remotely accessible either from a home set top box or from a central database.

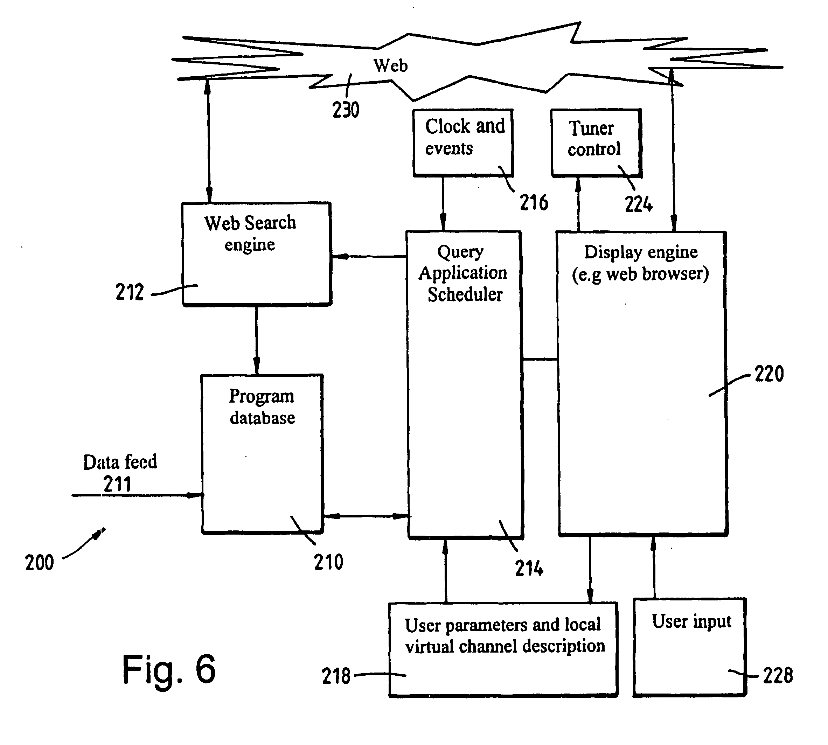

A block diagram 200 illustrating modules of the operating software of the system is shown in Figure 6. Programme database 210 receives data from Web-search engine 214 coupled to World Wide Web (Internet) 230, and also data from data feed 211. Virtual channel scheduling is carried out by scheduler 214, which interacts with programme database 210, and controls Web-search engine 212. This receives inputs from real- time clock and events handling software drivers 216 and user preference information/parameters and virtual channel description data from module 218.

The scheduler 214 also interacts with display engine 220, which controls the display of images on the television, and which preferably incorporates a Web-browser. The display engine interacts with tuner control module 224 to control the programme receiving means to provide programmes to the set top box output. It also receives user input from module 228 for scheduling programmes on a personal channel and for direct control of programmes provided to the television. Optionally a payment management module is also included to manage subscription payments to allow programme choices to be made from subscription channels, and to periodically download billing data for pay-per-view programmes.

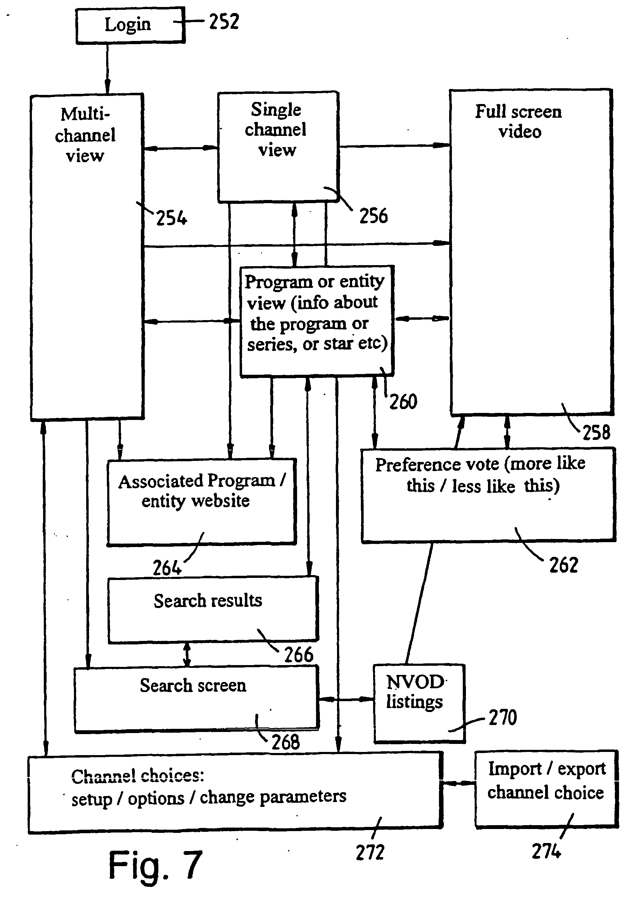

Figure 7 schematically shows elements of a simply exemplary user interface to the system and links between these elements which allow a user to navigate through the displayed menus and screens. The user enters at login screen 252 which, as described above, restricts access to the system. Once the user has successfully logged-on a multi-channel programme display 254 is presented in which the screen is divided into a number of small regions each of which displays a different programme. From this the user may navigate to a single channel view 256 similar to that of Figure 3, in which the user is presented with a single programme in a window on Web page, together with an electronic programme guide providing programme and time information. Selecting the video picture results in full screen video display 258.

From any one of screen displays 254, 256 and 258, additional information about a programme may be displayed - for example, a brief description and critic's comments - in screen view 260. From this screen and from the full screen video display the user can enter preference information and/or vote on screen 262 to indicate that more (or less) programmes of the type displayed are desired.

Associated programmes and/or Web sites providing further information relating to a programme may be accessed from screen 264 via the single 256 and multi-channel 254 view screens and programme information screen 260. Search screen 268 and search results screen 266 may be accessed as illustrated by the links shown, and also from NVOD listings screen 270. Further channel choices, including current user restrictions, user-defined personal channel sets, system set-up options and user parameters may be accessed from screen 272; personal channel schedules may also be defined from this screen, and user and channel data may be imported and exported via screen 274.

A further example of the system will now be described. In this example a set top box is equipped with software controlled tuning to generate custom programming tailored to the user's own preferences. Although the system is considered as an electronic program guide, a significant aspect of the system is the personalisation of television, giving the user a more interactive experience. In a preferred embodiment the software is substantially entirely contained within a user's local set top box (STB), which has only periodic contact with a server to download schedule data. In an alternative embodiment the system is implemented on both a local PC and a server using a combination of JavaScript and Perl. The server-side Perl scripts represent native applications and allow JavaScript to access data files on the server by using Perl to return the data in the form of a JavaScript library file.

The EPG system runs on a set top box with a capability of including a television window within a HTML page, to display broadcast and locally stored video. The EPG also has the capability to display a message over the television picture to remind or inform the user that a programme in which they are or may be interested is about to start on another channel, and more generally, to provide a reminder or notification feature.

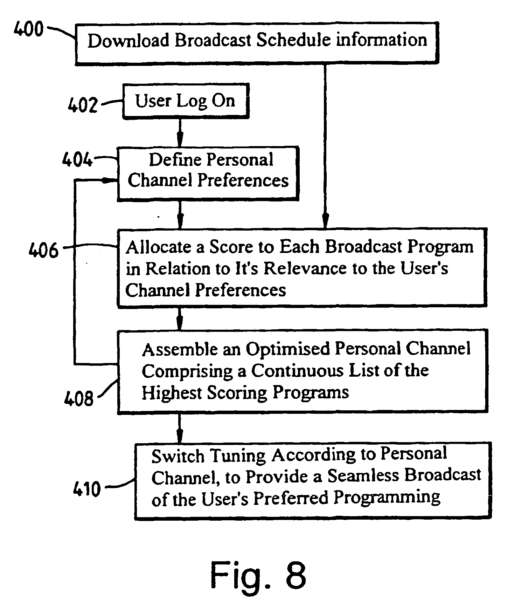

Preferably, the STB has access to several hundred broadcast channels. Figure 8 shows a flowchart illustrating how the system provides a personal channel. At 402 the user is presented with a login screen requesting a name and password, which allows the user to identify themselves to the system. The user is then able, at 404, to set their personal preferences for each personal channel, to define the types of programmes they wish to appear in the channel. Initially, a generalised picture of the channel is built by setting the user's preferences for each of a set of "genres" such as sport, film, science fiction, drama, etc. The preferences are set on a sliding scale from "never" to "always", each position on the scale corresponding to a positive, negative (or zero) value which is then used to score the programmes in a schedule database according to their relevance to the user's preferences.

The system requires a database of broadcast schedule information, which can either be built or which can be downloaded, as at step 400, from a remote source.

A genre comprises a predefined group or set of keywords which in one embodiment are not visible to the user. In many circumstances such a channel definition suffice, for example if all that the user desires is a channel which exclusively shows a particular genre or group of genres. However, it is preferable that a personal channel may be refined by the addition of specific keywords relating to the user's expectations (or by modification of a preset group of keywords). Thus the system preferably allows a user to enter a keyword which is also scored by the user using the sliding scale method. This allows relatively precise definitions to be created, for example, to define a channel which will show only films, favouring those with a romantic theme, but never those with, say Kevin Costner. Alternatively, a simple channel could be defined that shows news and sport and that will always include anything relating to a particular named team.

Once the user's preferences have been defined, in one embodiment every programme in the database is allocated a score based on those settings (step 406). This can be accomplished by accumulating the positive and negative scores for each, keyword defined in the channel settings that appears in a programme's details. The schedule database is then sorted in order of the programme scores and the top scoring programmes are assembled to form a seamless listing of the programmes which best fit the user's preferences (step 408).

When the user chooses to view or "tune to" one of their personal channels, control of the television channel tuning is handed to the EPG, which determines which broadcast channel is required for the current programme in the personal channel schedule, and which changes channels accordingly at each programme break (step 410).

The process of defining the user's preferences is advantageously performable interactively with the display of the resulting schedule, allowing the user substantially immediately to see the results of their changes on the programmes which appear in their personal channel.

Once a personal channel has been defined it is saved and appears in the user's programme guide exactly as if it were a broadcast channel. To achieve this, the channel is rebuilt according to the user's stored preferences each time the user logs in.

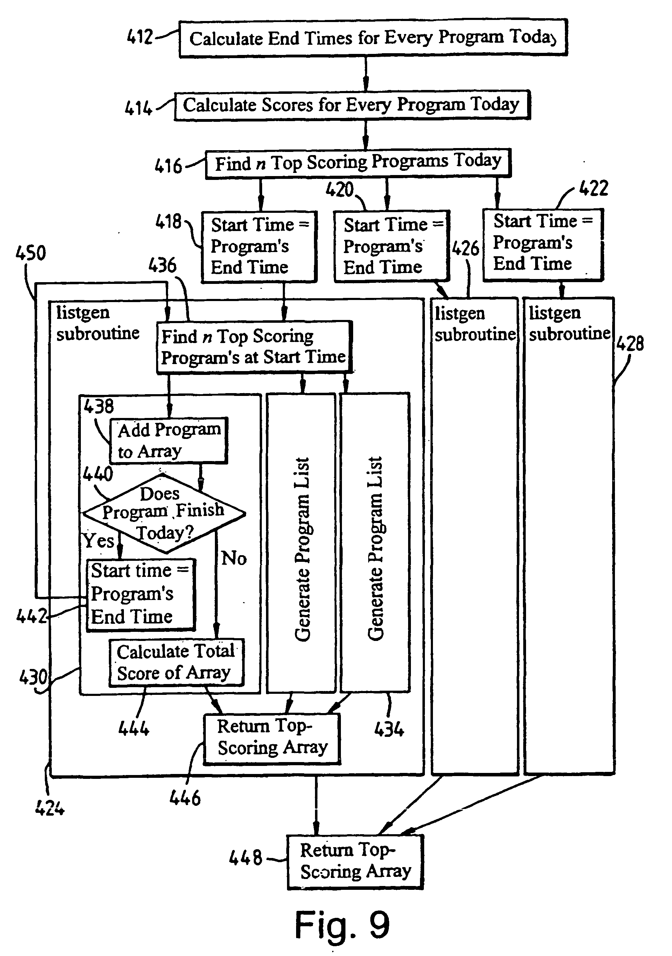

Referring now to Figure 9, this shows an algorithm for constructing a personal channel based upon a user's preferences. As illustrated in Figure 9, a personal channel is constructed using a recursive application, ListGen subroutine 424, which generates an optimised list of programmes starting at a given time. The application can be set to make any number of attempts at generating an ideal personal list or schedule but practical limitations on the software running time mean that this is preferable to impose an upper integer limit, n, representing the number of allowed attempts.

The algorithm aims to ensure that the selected personal schedule contains an optimum distribution of relevant material. To address this, after calculating end times 412 and scores 414 for a day's programming, it locates 416 a selection of n of the most relevant programmes in the database for the chosen day. For each of these programmes the algorithm then locates the n most relevant programmes that start at the end times of the n first selected most relevant programmes. This can be carried out as a single process for, as illustrated by steps 418, 420, 422 and subroutines 424, 426 and 428, with a degree of parallelism. The software then iterates forwards and repeats the process working backwards from the initially selected programmes start times, finding the n most relevant programmes n at the selected programmes start times and then for each of those a further s programmes and so on. In this way, a tree of possible schedule lists is formed. The application then selects the schedule with the highest amount of relevant material as determined by scores of the programmes or by counting programmes with scores within or above threshold value.

The scores are generated based upon the user's preferences, for example by counting the number of keywords in common with a given programme.

For each of the n top scoring programmes identified by step 416 the ListGen subroutine 424 generates an optimised list or schedule. This subroutine accepts start time as an argument, locates the n top scoring programmes at that time (step 436) and for each of those recalls itself (loop 450), sending the programme's end time as the argument, and appends the return value to its listed programme (block 430 and step 438). Each instance of ListGen stops looping when the finishing time of the last programme in its list extends into the next day's viewing (steps 440, 442, 444). It then returns the programme list with the highest total score (step 446). A ListBackGen subroutine is then used for each list to generate an optimised schedule of programmes that terminates at the start time of each of the n programmes. ListBackGen works in an identical fashion to ListGen but accepts end time as its argument. The ListGen result is appended to the ListBackGen result, producing n lists of relevant material (the ListBackGen subroutine is not shown in Figure 9). The lists are compared (steps 446, 448) and list with the highest total score is used as the personal channel's schedule.

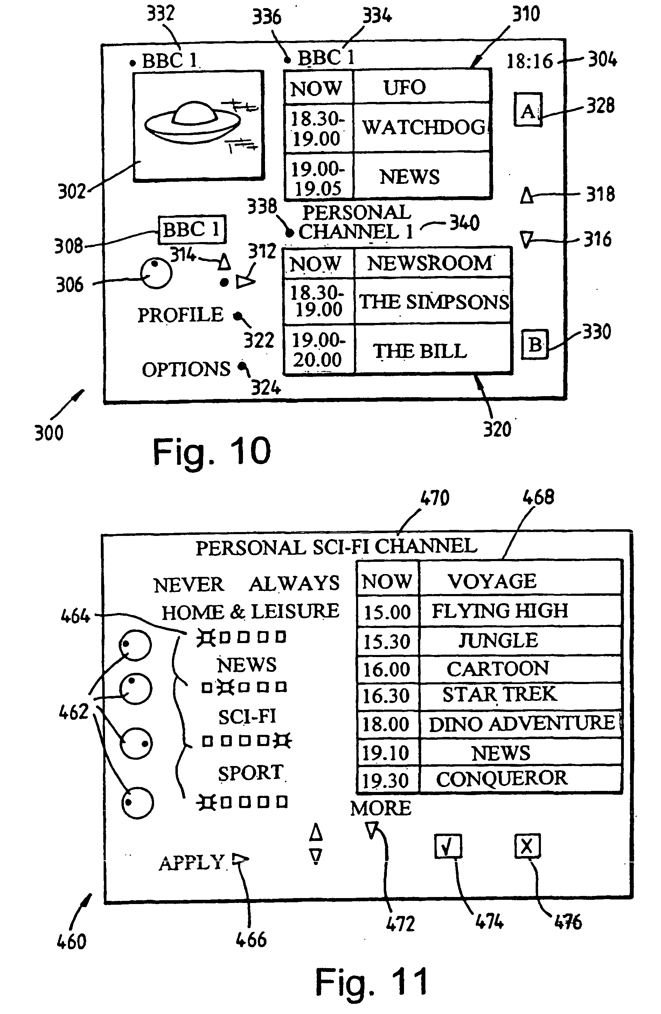

Figure 10 shows a multi-channel view screen 300 of the EPG, which presents a selection of the available channels with the now/next listing 310, 320, for each. The screen has a clock 304 which is used to control all timed functions such as updating the now/next displays.

Each listed channel is displayed under a header bar 334, 340 showing the channel's name and indicating its type (for example, personal channel, fixed virtual channel, broadcast channel), for example by means of an icon (not shown). The header bar also includes select buttons 336, 338 to show more details of a channel schedule and/or to display the channel full screen on the TV. The channel details or channel view screen (not shown) is described in more detail below and allows channel preferences to be accessed.

A TV window 302 is provided to show the channel to which the STB is currently tuned. The name and controls for the current channel are displayed in header 332. Channel selection control 306 is usable to dial up a channel in window 308 which can be displayed in TV window 302 by selecting button 314 and which can be displayed in the schedule listings using button 312. Page-up and page-down 318 and 316 step through schedule listings block at a time and buttons 322 and 324 are used to select user profile and options as described below.

The system is also capable of providing fixed list channel schedules. A fixed list channel is a virtual channel comprising a schedule of material from any available broadcast channels individually chosen by a user, a TV critic, an advertiser, or the like. As with the personal channel the STB automatically re-tunes to each broadcast channel as required, providing the effect of a single channel. When either of buttons 328 and 330 are selected, a predefined fixed list (virtual) channel is downloaded and added to the channel list. This allows the user to view a personalised channel designed by another person, such a TV critic. Additional functions can be provided to allow the user to load a personal channel designed by another person; in this case the EPG loads a set of personalisation parameters and assembles the personal channel accordingly.

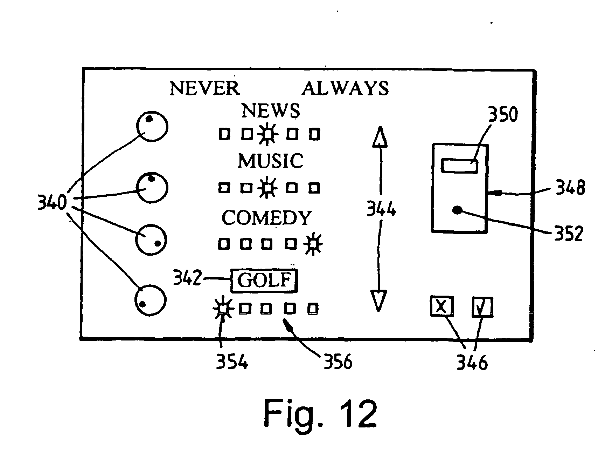

A channel view (not shown) is available to provide the user with a more in-depth view of a schedule for a particular channel. Further information on each programme is displayed and, in the case of fixed list and personal channels, the broadcast channel from which the programme is taken is also shown. A switch allows the user to toggle between the schedules for the whole day and an extended now/next display. A control panel controls buttons which take the user back to the multi-channel view of Figure 10, to a search screen and, in the case of a personal channel, to a channel preferences screen, as shown in Figure 11. Referring to Figure 11, this shows a channel preferences screen 460 with a personal channel title 470 and a personal channel schedule 468, more of which can be shown by selecting button 470. The channel preferences screen allows the user to interactively adjust the settings for a personal channel.

The left hand side of the screen contains a bank of controls 460 each allocating the weighting or score of a particular genre or keyword (a genre constituting a predefined collection of keywords, the actual keywords of which are hidden from the user). The user can set the controls to define, by means of a bar chart type display, the degree of preference for a given genre. Genre lists are preferably downloaded with the broadcast schedules, allowing them to be modified and improved by the service provider. A facility may also be provided for the user to define his/her own genres or keywords or add them to those that appear in the channel preferences screen (this option is not shown in Figure 11). The list of settings is navigated in blocks using page-up/page-down type arrow controls.

When adjustments have been made, their effect on the schedule list can be seen by pressing apply button 466, which causes the EPG to generate a new schedule using the updated settings and to display it in window 468. Once the user is satisfied with the schedule the changes are implemented by pressing OK button 474, or alternatively discard it by pressing cancel button 476.

A user profile screen, accessible from multi-channel view screen 300, is shown in Figure 12. The user profile controls the global behaviour of the EPG across all channels and is intended mainly for enforcing parental control, although more generally it is usable to control the display of any type of material across the whole of the EPG. The interface is broadly similar to that of channel preferences screen 460, with rotary controls 340 for selecting, on a sliding scale, user preferences for pre- or user-defined genres and/or keywords. Thus, for example, the keyword "golf" has been entered into window 342 and the corresponding control has been set so that programmes on golf never appear.

Access to the user profile screen is controlled by a parental control lock 348, unlocked by entering a password into window 350 and activating button 352. When locked the user profile settings cannot be changed and a warning is displayed if an attempt is made to change them without first entering a password.

The EPG's response to the user preference settings depends upon whether a setting is positive or negative. Positive settings add extra weight to the selected genre or keyword for all personal channels, when the personal channels are generated. Negative values also affect all personal channels and are in addition applied to fixed list (virtual) and broadcast channels, by blocking access to channels when a programme contains data that is classified as "never".

A user options screen (not shown) provides an option for programme schedules to indicate schedule programmes' relevance to the user profile, to a personal channel, or to the settings for a search (a search is implemented similarly to a user profile and to a channel preference selection). In one embodiment relevance of programmes is indicated by shading in schedule listings so that more relevant programmes stand out better against a background, for example, by shading from light for highly relevant to dark for less relevant.

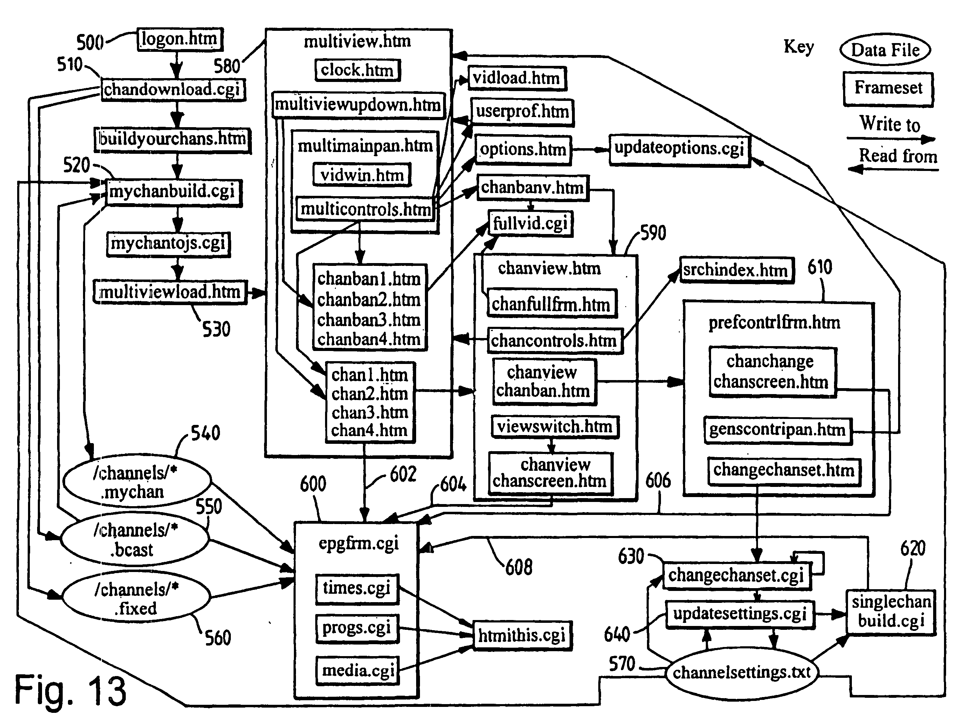

Figure 13 shows a summary of the relationship between files of the EPG system. Referring to the main features of the file structure, the user login at 500 and information on fixed list (virtual) channels and broadcast channels is downloaded at 510 to form data files 560 and 550. Information from these data files is used to build personal channels at step 520, for storage in datafile 540. The multi-channel view screen is then loaded 530 and displayed 580. From the multi-channel view screen the user can access channel view screen 590 and thence channel preferences screen, shown in frame set 610. Personal channel settings are changed at 630 and updated at 540 to build 620 a new personal channel for display and to provide a channel settings datafile 570 which is used for building 520 the personal channels after the user logs in. Personal channel build block 620, multi-channel view frame set 580, channel view frame set 590 and channel preferences frame set 610 all couple to EPG channel schedule display frame set 600 via links 608, 602, 604 and 606 respectively. The EPG display 600 also utilises broadcast 550, fixed 560 and personal 540 channel data files.

The above described personal channel scheduling system can be extended to offer additional facilities. For example, where a programme is broadcast several times during a day, such as is common with NVOD broadcasts, means can be provided to prevent duplication of highly relevant programmes throughout a personal channel. As mentioned above, a search facility operating in a similar way to the "shading by relevance" indication can be provided and a user can be given the option of creating a new personal channel based upon the settings used for the search.

A personal channel that produces consistently interesting viewing is likely to be of interest to other users. All that is needed to produce a personal channel on another STB is to duplicate channel settings, which constitute only a very small quantity of data. Preferably, a fixed, extendible format is defined for personal channel definition to facilitate distribution of personal channel settings between users, for example via e-mail or posting on websites. Such channels are also potentially a marketable commodity, for example they comprises settings favoured by a celebrity. Thus by downloading a personal channel a user can install a channel that 'thinks'' in the same way as a favourite TV critic, automatically selecting material in a way defined by the critic (or by the celebrity).

A user can be provided with means to indicate how well a given scheduled programme fits their expectations, and the weights of a personal channel can be adjusted according to the goodness of fit. Other programmes for scheduling can also be separately weighted according to any keywords they share with a selected programme which fits well with the user's expectations; in effect this allows a construction of a personal genre definition.

A user can be given the option of weighting programmes according to their popularity with either the general viewing public or with viewers of a similar usage/personality profile to their own. This can be achieved by, for example, storing details of the viewer or user profile on a server linked to a plurality of set top boxes.

By treating existing channels as genre definitions it is possible to set-up an evening's viewing schedule by remapping personal channels into other personal channels. This can provide a schedule such as an hour of programming from a personal news channel, followed by an hour from a personal entertainment channel, followed by something from a personal movie channel. Such a time-based personal channel can be extended to allow different personal channel time-defined "sets" or schedules to be defined on different days of the week or month to reflect differing viewing habits through a week or month or even year.

Advantageously a button is added to each scheduled programme to allow a user to perform one of several functions; to move it to a fixed list (virtual) channel (for example, to add it to tonight's viewing); to create a new personal channel based on keywords associated with the item or programme; to use keywords for the item in a search; and to set up a diary reminder for the item or programme.

As described above, the EPG generates substantially seamless schedules of broadcast material. Such an arrangement can result in a need to fill a gap between two highly relevant programmes with material that is not strictly relevant but fits the gap. In such a situation advantageously a user can be provided with the option to decide what material is used for this "fill-in" purpose. Options include simply leaving a gap in the schedule; fill-in using NVOD material; fill-in using a favourite channel; fill-in using a previously recorded programme, using selection a database of the user's video collection; and fill-in with less relevant material.

Advantageously a multi-user or family mode can be provided for the system to allow the multi-channel view to display personal channels for each member of a family or group of people simultaneously. Preferably, a user has the option of personalising the user interface to change the colour scheme and/or graphics used, to provide a sense of ownership and individuality.

By monitoring a user's user profile and/or channel settings and/or diary items, for example downloading information from the STB to a server as described in connection with weighting according to popularity above, it is possible to build up a personality profile of a user. This can be advantageously used to, for example, target advertising of items of specific interest to the user, either by switching between broadcast channels appropriately or by downloading specific adverts, for example, overnight or together with downloaded schedule information.

Although the device has been described with reference to its use for scheduling television programmes, the system is also suitable for scheduling any type of programme entity, including digital music/audio programmes and computer games. More generally it is suitable for addressing the problems of scheduling any set of programme-type entities given a relatively large number of candidate entities for scheduling.

Many other effective alternatives will occur to those skilled in the art and it is to be understood that the invention is not limited to the described embodiments.

## Claims

1. A method of building a personal channel schedule comprising
i) receiving user preference information characterising a user's preferred programmes;
ii) receiving programme descriptor information for broadcast programmes;
iii) scoring the broadcast programmes based on the user preference information using the programme descriptor information;
iv) selecting a first programme using the results of the scoring and adding this to a personal channel schedule;
v) identifying either later adjoining programmes which start after the end of the last programme in the schedule or earlier adjoining programmes which finish before the start of the first programme in the schedule;
vi) scoring the adjoining programmes based on the user preference information;
vii) selecting a second programme from the adjoining programmes using the results of scoring the adjoining programmes;
viii) adding the second programme to the schedule; and
ix) repeating steps (v)-(viii) to build up the personal channel schedule.

2. A method as claimed in claim 1
comprising identifying both earlier and later adjoining programmes whereby the schedule is built up by adding programmes both before and after the first programme.

3. A method as claimed in claim 1 or 2
wherein steps (v) to (viii) are executed recursively.

4. A method as claimed in any one of claims 1 to 3 further comprising:
generating a plurality of channel schedules;
scoring each generated schedule based on the user preference information; and
selecting a personal channel schedule based on the results of the scoring.

5. A method as claimed in any one of claims 1 to 4
wherein the personal channel schedule is substantially seamless.

6. A computer program to, when running, perform the method of any one of claims 1 to 5.

7. A computer readable medium storing the computer program of claim 6.

## Patentansprüche

1. Verfahren zur Erstellung eines persönlichen Kanalplans mit den Schritten:
i) Empfangen von Anwenderbedarfsinformation, die bevorzugte Programme eines Anwenders kennzeichnet;
ii) Empfangen von Programmdeskriptorinformation für Rundsendeprogramme;
iii) Bewerten der Rundsendeprogramme auf der Grundlage der Anwenderbedarfsinformation unter Verwendung der Programmdeskriptorinformation;
iv) Wählen eines ersten Programms unter Verwendung der Ergebnisse der Bewertung und Hinzufügen desselben zu einem persönlichen Kanalplan;
v) Erkennen entweder späterer Anschlussprogramme, die nach dem Ende des letzten Programms im Plan beginnen, oder vorheriger Anschlussprogramme, die vor Beginn des ersten Programms im Plan enden;
vi) Bewerten der Anschlussprogramme auf der Grundlage der Anwenderbedarifsinformation;
vü) Wählen eines zweiten Programms aus den Anschlussprogrammen unter Verwendung der Ergebnisse der Bewertung der Anschlussprogramme;
viii) Hinzufügen des zweiten Programms zum Plan; und
ix) Wiederholen der Schritte (v) bis (viii), um den persönlichen Kanalplan zu erstellen.

2. Verfahren nach Anspruch 1 mit dem Schritt: Erkennen sowohl vorheriger als auch späterer Anschlussprogramme, wobei der Plan erstellt wird, indem Programme sowohl vor als auch nach dem ersten Programm hinzugefügt werden.

3. Verfahren nach Anspruch 1 oder 2,
wobei die Schritte (v) bis (viii) rekursiv ausgeführt werden.

4. Verfahren nach einem der Ansprüche 1 bis 3, ferner mit den Schritten:
Erzeugen einer Vielzahl von Kanalplänen;
Bewerten jedes erzeugten Plans auf der Grundlage der Anwenderbedarfsinformation; und
Wählen eines persönlichen Kanalplans auf der Grundlage der Ergebnisse der Bewertung.

5. Verfahren nach einem der Ansprüche 1 bis 4,
wobei der persönliche Kanalplan im wesentlichen nahtlos ist.

6. Computerprogramm, das, während es läuft, das Verfahren nach einem der Ansprüche 1 bis 5 durchführt.

7. Computerlesbares Medium, das das Computerprogramm nach Anspruch 6 speichert.

## Revendications

1. Procédé d'élaboration d'une planification de canal personnel comprenant:
i) la réception d'une information de préférence d'utilisateur qui caractérise des programmes préférés d'utilisateur;
ii) la réception d'une information de descripteur de programme pour des programmes diffusés;
iii) l'évaluation des programmes diffusés sur la base de l'information de préférence d'utilisateur en utilisant l'information de descripteur de programme;
iv) la sélection d'un premier programme en utilisant les résultats de l'évaluation et en leur additionnant une planification de canal personnel;
v) l'identification soit de programmes contigus plus tard qui démarrent après la fin du dernier programme dans la planification, soit de programmes contigus plus tôt qui se terminent avant le début du premier programme dans la planification;
vi) l'évaluation des programmes contigus sur la base de l'information de préférence d'utilisateur;
vii) la sélection d'un second programme parmi les programmes contigus en utilisant les résultats d'évaluation des programmes contigus;
viii) l'addition du second programme à la planification; et
ix) la répétition des étapes (v) à (viii) afin d'élaborer la planification de canal personnel.

2. Procédé selon la revendication 1, comprenant l'identification à la fois de programmes contigus plus tôt et plus tard et ainsi, la planification est élaborée en additionnant des programmes à la fois avant et après le premier progamme.

3. Procédé selon la revendication 1 ou 2, dans lequel les étapes (v) à (viii) sont exécutées de façon récursive.

4. Procédé selon l'une quelconque des revendications 1 à 3, comprenant en outre:
la génération d'une pluralité de planifications de canal;
l'évaluation de chaque planification générée sur la base de l'information de préférence d'utilisateur; et
la sélection d'une planification de canal personnel sur la base des résultats de l'évaluation.

5. Procédé selon l'une quelconque des revendications 1 à 4, dans lequel la planification de canal personnel est sensiblement sans coupure.

6. Programme d'ordinateur pour, lorsqu'il est déroulé, réaliser le procédé selon l'une quelconque des revendications 1 à 5.

7. Support lisible par ordinateur qui stocke le programme d'ordinateur de la revendication 6.
